# EUROPEAN PATENT SPECIFICATION

(11) **EP 1 726 460 B1**
(45) Date of publication and mention of the grant of the patent: **18.11.2009**
(21) Application number: 05011318.2
(22) Date of filing: 25.05.2005
(51) Int. Cl.: B60H 1/00

(54) **Air distribution device with dependent rotation movements of rotary flaps**
Luftverteilervorrichtung mit Drehklappen mit voneinander abhängigen Drehbewegungen
Dispositif de distribution d'air avec volets rotatifs à mouvements rotatifs dépendants

(43) Date of publication of application: 29.11.2006
(73) Proprietor: VALEO AUTOKLIMATIZACE s.r.o., CP 269 44 Rakovnik (CZ)
(72) Inventor: Horacek, Petr, Plzen-City 320 00 (CZ); Onuska, Ivan, Praha 8- City 180 00 (CZ)
(74) Representative: Lemaire, Marc

(56) References cited:
- EP-A- 0 600 779
- EP-A- 1 462 282
- EP-A- 1 514 708
- FR-A- 2 746 714

## Description

The present invention relates to an air distribution device, particularly for a heating, ventilating and/or air conditioning system of a motor vehicle.

More particularly, the present invention relates to such a device comprising a rotating member rotatably mounted within a casing so as to permit an air flow to circulate following several paths depending on an angular position of the rotating member.,

Such devices are employed, for example, in order to share an air flow between a first path to the windscreen of the vehicle and one or more paths to air outlets located in the interior of the vehicle.

For technical reasons, the rotating member has to be made in separate rotating parts. It becomes necessary to make the rotation movements of these rotating parts dependent on each other. In particular, this allows to provide a unique rotation control.

One example of such a distribution device is disclosed in EP 0600779, upon which the preamble of appending claims is based.

One goal of the invention is to provide an air distribution device, which rotating member comprises at least two rotating parts, the rotation movements of these rotating parts being dependent on each other.

It is also an objective of the present invention to provide such a device which is simple to manufacture, robust, easy to assembly and whose dimensions are reduced.

The present invention provides a device as defined in the appending claims 1 and 3, with corresponding subclaims defining preferred embodiments thereof.

Other features and advantages of the present invention will become apparent in the following description taken in conjunction with the drawings, in which:
- The figure 1 is a schematic view of a device according to the invention, in a section view along to the rotation axis of the device, the device being in a first angular position,
- The figure 2 is a section view of the figure 1 along to the line II-II,
- The figures 3 and 4 are similar to the figures 1 and 2, the device being in a second angular position,
- The figure 5 is a perspective view of a first rotating part for the device according to the invention in a first embodiment,
- The figure 6 is a perspective view of a second rotating part for the device according to the invention in the first embodiment,
- The figure 7 is a perspective view of a rotating member for the device according to the invention in the first embodiment,
- The figures 8 to 12 are transverse section views of the device according to the invention in the first embodiment, the first and second rotating parts being in different angular positions,
- The figures 13 to 15 are similar to figures 5 to 7 and relate to a second embodiment of the device according to the invention, and
- The figures 16 to 20 are similar to the figures 8 to 12 and relates to the second embodiment of the device according to the invention.

The drawings are used to illustrate the present invention but they also make part of said invention.

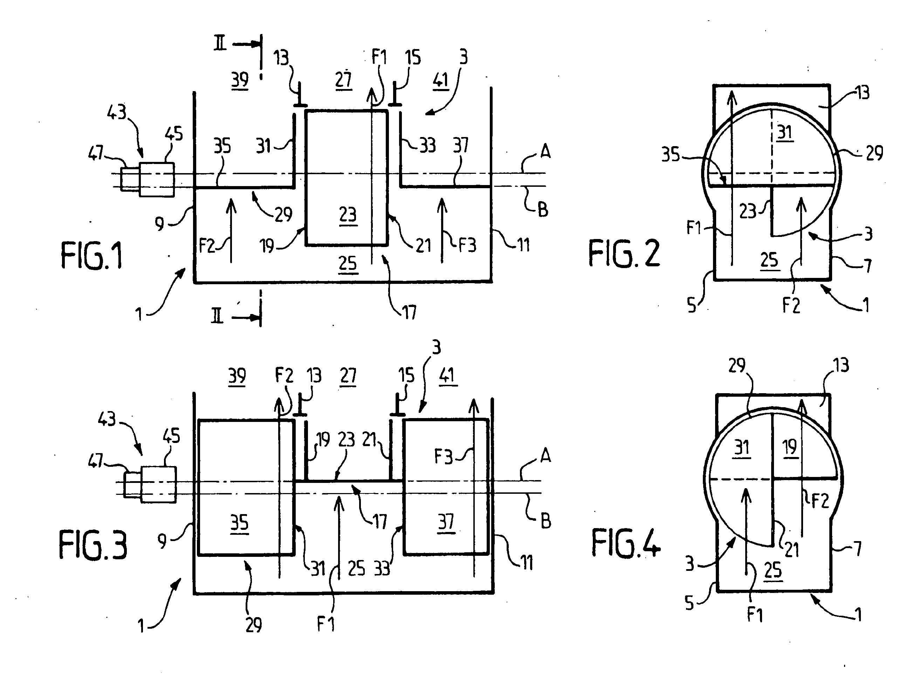

The device shown in the figures 1 to 4 is for being mounted in the front of a motor vehicle interior. This device comprises a casing 1 and a rotating member 3 mounted within it. The rotating member 3 cooperates with different walls of the casing 1 for defining paths for an air flow. More particularly, said walls comprise a wall 5 generally vertical, extending parallel to a horizontal axis and directed towards the front of the vehicle, a wall 7 opposite to the wall 5 and directed towards the rear of the vehicle, wall 5 and wall 7 being connected to each other by a left end wall 9 and a right end wall 11, as well as two intermediate partitions 13 and 15 extending according to generally vertical planes in a upper part of the casing 1.

The rotating member 3 comprises a first rotating part 17 rotatably mounted within the casing 1 according to a first rotation axis A. The rotating part 17 comprises a first transverse partition 19 and a second transverse partition 21. In this embodiment, partitions 19 and 21 are perpendicular to the axis A and extend parallel to each other. In other embodiments, partitions 19 and 21 could be inclined with respect to the axis A and/or inclined to each other. In the figures 1 to 4, partitions 19 and 21 are illustrated as portions of circular plates and as being located in the planes of the partitions 13 and 15 respectively.

The rotating part 17 further comprises a first axial partition 23. In the figures 1 to 4, the partition 23 is illustrated as extending according to a plane comprising the axis A. In this embodiment, the partition 23 is perpendicular to the planes of the partitions 19 and 21. The partition 23 extends from the partition 19 to the partition 21 and connects thereto.

In a first angular position of the rotating part 17 relative to the casing 1, shown in figures 1 and 2, the partition 23 is located parallel to the wall 5 and opens a first air path F1 between an upstream chamber 25 and a first downstream chamber 27. The chamber 25 is located upstream from the member 3 in the casing 1 according to the air flow. The chamber 27 is defined by the partitions 13 and'15 and by the walls 5 and 7. The chamber 27 is located downstream from the member 3 according to the air flow.

As shown in figures 3 and 4, in a second angular position, the partition 23 is substantially perpendicular to the partitions 13 and 15. In this position, the partition 23 co-operates with the walls 5 and 7 for closing the first air path F1, and the partitions 19 and 21 co-operate with the partitions 13 and 15 respectively for closing the path F1 downstream from the partition 23.

In intermediate angular positions of the rotating part 17, the path F1 is partially closed.

The member 3 further comprises a second rotating part 29 rotatably mounted within the casing 1 according to a second rotation axis.B. The rotating part 29 comprises two transverse partitions 31 and 33. The partitions 31 and 33 are illustrated in the figures 1 to 4 as portions of circular plates and as being located in the planes of the partitions 13 and 15, respectively. The partitions' 31 and 33 are connected to respectively a second axial partition 35 and a third axial partition 37. The partitions 35 and 37 extend along the axis B from the wall 9 to the partition 13 and from the partition 15 to the wall 11 respectively.

In a first angular position of the rotating part 29 relative to the casing 1, shown in the figures 3 and 4, the partition 33 opens a second air path F2 between the chamber 25 and a second downstream chamber 39. The chamber 39 is defined by the partition 13 and the wall 9 as well as the walls 5 and 7.

As shown in figures 1 and 2, in a second angular position of the rotating part 29, the partition 35 is located in a plane which is substantially perpendicular to the walls 5 and 7. In this position, the partition 35 co-operates with the walls 5 and 7 for closing the path F2 and the partition 31 co-operates with the partition 13 for closing the path F2 downstream from the partition 35

In the intermediate angular positions of the rotating part 29, the path F2 is partially closed.

In the first angular position of the rotating part 29, the partition 37 opens a third air path F3 between the chamber 25 and a third downstream chamber 41 (shown in figure 3 and 4). The chamber 41 is defined by the partition 15 and the wall 11 as well as by the walls 5 and 7.

In the second angular position of the rotating part 29, the partition 37 co-operates with the walls 5 and 7 for closing the path F3, and the partition 33 co-operates with the partition 15 for closing the path F3 downstream from the partition 37, as shown in figures 1 and 2.

As shown in figures 1 and 3, a coupling device 43 is arranged between the rotating part 17 and the rotating part 29 so as to make the rotation movements of these parts dependent on each other. Thus, only one rotation control is needed in order to operate the member 3. In other words, the closing and the opening of the paths F1, F2 and F3 are dependent on each other and are controlled by a unique rotation control.

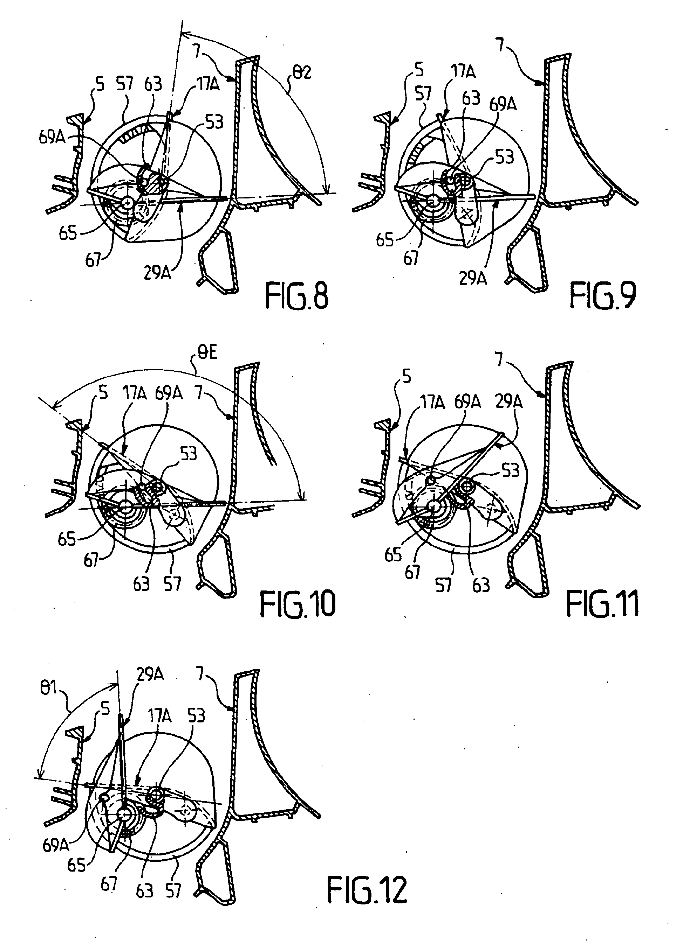

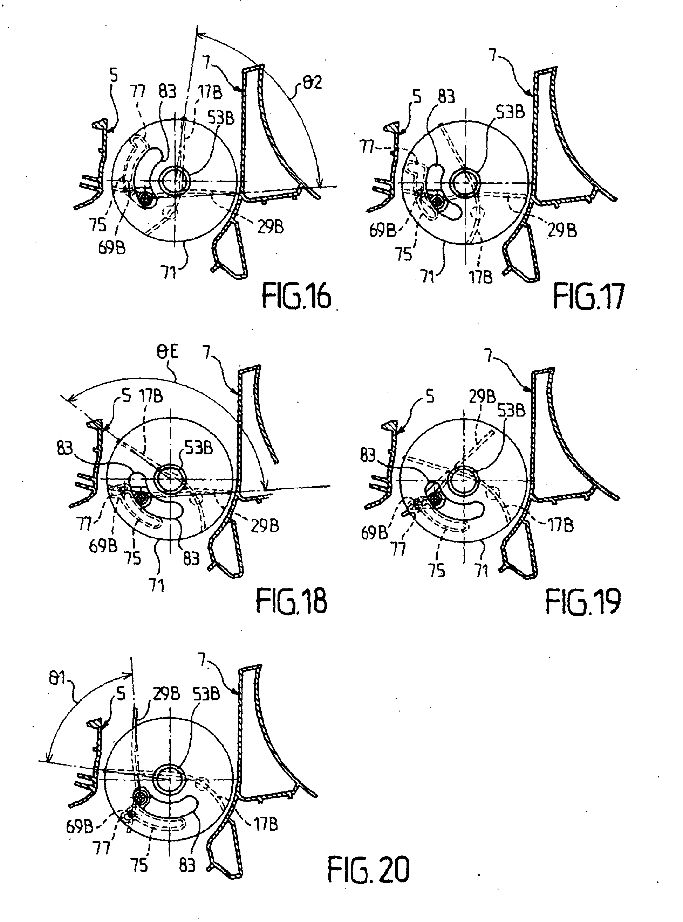

The coupling device 43 comprises a transmission member 45 for driving the rotating part 29 by the rotating part 17. The member 45 is configured so as to drive the rotating part 29 from an engagement angular position θE, or intermediate angular position, to a first end angular position θ1 of the rotating part 29 relative to the rotating part 17. The angular positions θE and θ1 are shown in figures 10, 18 and 12, 20 respectively for particular embodiments, and will be explained in more details below. The transmission member 45 is not active from a second end angular position θ2 of the rotating part 17 relative to the rotating part 29 to the angular position θE. The angular position θ2 is shown in figures 8 and 16 for particular embodiments. Between the positions θ2 and θE, the rotating part 29 is not driven by the rotating part 17.

In this embodiment, it is supposed that the rotating part 29 is driven by the rotating part 17. In this configuration, a rotation control member (not shown) is arranged integrally with the rotating part 17 in order to manually or automatically drive the rotating part 17. In other embodiments, the rotating part 17 can be driven by the rotating part 29, a rotation control member being arranged integrally with the rotating part 29.

The rotating parts 17 and 29 are mounted in the casing 1 so that the part 29 is in its first angular position and the part 17 is in its second angular position when the rotating parts 17 and 29 are in the angular position θ1. In the angular position θ2, the rotating part 17 is in its second angular position and rotating part 29 is in its first angular position. In other words, the paths F2 and'F3 are closed in position θ2 and the path F1 is closed in position θ1.

The coupling device 43 further comprises a guidance member 47 for guiding the rotating part 17 relative to the rotating part 29 from the angular position θ2 to the angular position θE. The guidance member 47 is arranged so as to permit a rotation of the rotating part 17 relative to the casing 1 while preventing a rotation of the rotating part 29 relative to the casing 1. From the angular position θE to the angular position θ1, the guidance member 47 is not active, thus allowing a rotation of the rotating part 29 relative to the casing 1.

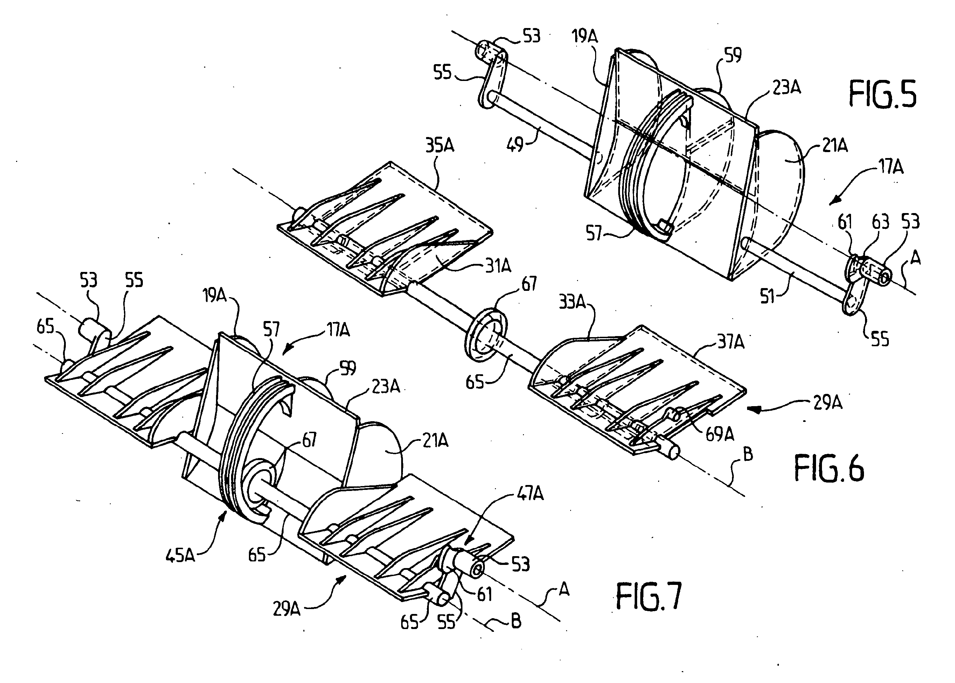

Figures 5 to 12 illustrate a first embodiment of the rotating member 3. In these figures, the same reference numerals as previously used, are employed to designate functionally similar elements. The letter "A" has been added to these numerals in order to distinguish the functional elements of figures 1 to 4 from their embodiment shown in figures 5 to 12.

The first rotating part 17A shown in figure 5 comprises a first axial partition 23A attached at the axial ends to transverse partitions 19A and 21A. The partition 23A is generally rectangular shaped and incurved along a line parallel to the rotation axis A of the rotating part 17A. The partition 23A comprises two' axial and parallel edges defining a plane. The partitions 19A and 21A are substantially half-circular shaped and comprise each a rectilinear edge located in the plane defined by the edges of the partition 23A.

On one side of the partitions 19A and 21A, to which the partition 23A is not connected, a shaft 49 and a shaft 51 protrude from the partitions 19A and 21A respectively. The shafts 49 and 51 extend parallel to the rotation axis A but are located offset thereof. At one end, the shafts 49 and 51 are connected respectively to coaxial bearings 53 through excentering means 55. The bearings 53 are configured as portions of a hollow shaft. The excentering means are configured as transverse plates connected to both the shafts 49 or 51 and the bearings 53. Each bearing 53 can be rotatably mounted in a housing (not shown) arranged in the casing 1 and more precisely in walls 9 and 11, thus defining the rotation axis A of the rotating part 17A. The partition 23A contains the rotation axis A.

An annular gear 57 protrudes from one side of the partition 23A. The gear 57 is arranged as a partially toothed half-circular ring. The gear 57 is centered with respect to the rotation axis A. On the other side of the partition 23A, an additional transverse partition 59 extends parallel to partitions 19A and 21A, at a median position. The partition 59 is also half-circular shaped. Once the rotating part 17A is mounted within the casing 1, the gear 57 is opposite to the partitions 13 and 15. The gear 57 can be located at others positions. Particularly, the gear 57 is not necessary located at a median position with respect to the partitions 19A and 21A.

One of the bearings 53 is integral with a portion of a transverse side plate 61, which can be coplanar with the excentering means 55. The plate 61 comprises a groove 63 forming a cam track for a cam follower. The groove 63 is arranged as a portion of a circular groove centered with respect to the axis A.

The rotating part 29A shown in figure 6 comprises a second axial partition 35A and a third axial partition 37A, both extending along the rotation axis B of the rotation part 29A. The partitions 35A and 37A are detachably mounted on a main shaft 65. Both ends of the shaft 65 can be rotatably mounted within the casing 1 in housings, thus defining the rotation axis B. Each partition 35A and 37A comprises a transverse partition 31A and 33A attached thereto. The partition 35A and 37A are mounted apart from each other so that the partition 23A of the rotating part 17A can be intercaled between partitions 35A and 37A, as shown in figure 7. At a median position, a gear 67 is fixedly mounted on the shaft 65. The gear 67 is arranged to co-operate with the gear 57, thus forming together a transmission member 45A. The gear 67 has not to be necessary located at a median position of the shatf 65 provided that the gear 67 is located such that it can engage the gear 57.

As shown in figure 6, a cylindrical pin 69A protrudes from the partition 37A parallel to the rotation axis B and offset thereof. The offset of the pin 69A with respect to the rotation axis B is chosen so that the pin 69A can be housed in the groove 63, as shown in figure 7. The pin 69A and the groove 63 form together a guidance member 47A.

The operation of the rotating member 3 will now be explained below in conjunction with the figures 8 to 12.

Figure 8 shows the rotating member 3 when the rotating part 17A and 29A are in the angular position θ2 relative to each other. In this angular position, the gear 57 is not toothed so that there is no engagement between the rotating parts 17A and 29A. The pin 69A is located within the groove 63. Because the groove 63 is circular and centered with respect to the rotation axis A, the rotating part 17A can rotate relative to the casing 1 without engaging the pin 69A, which moves relative to the groove 63, as shown for example in figure 9. Because the pin 69A is offset with respect to the axis B, the rotating part 29A is prevented to rotate until the pin 69A is located within the groove 63 (also shown in figure 9). In the angular position θE shown in figure 10, the pin 69A is released from the groove 63 and the gear 67 engages the gear 57, which is toothed from this angular position θE. From this angular position θE, a rotation of the rotating part 17A results in a rotation of the rotating part 29A, as shown in figure 11, since this rotation is no more prevented by the pin 69A and the groove 63. These dependent rotation movements occur to the angular position θ1 shown in figure 12. In this angular position θ1, the rotating part 17A is in its second angular position whereas the rotating part 29A is in its first angular position, both relative to the casing 1.

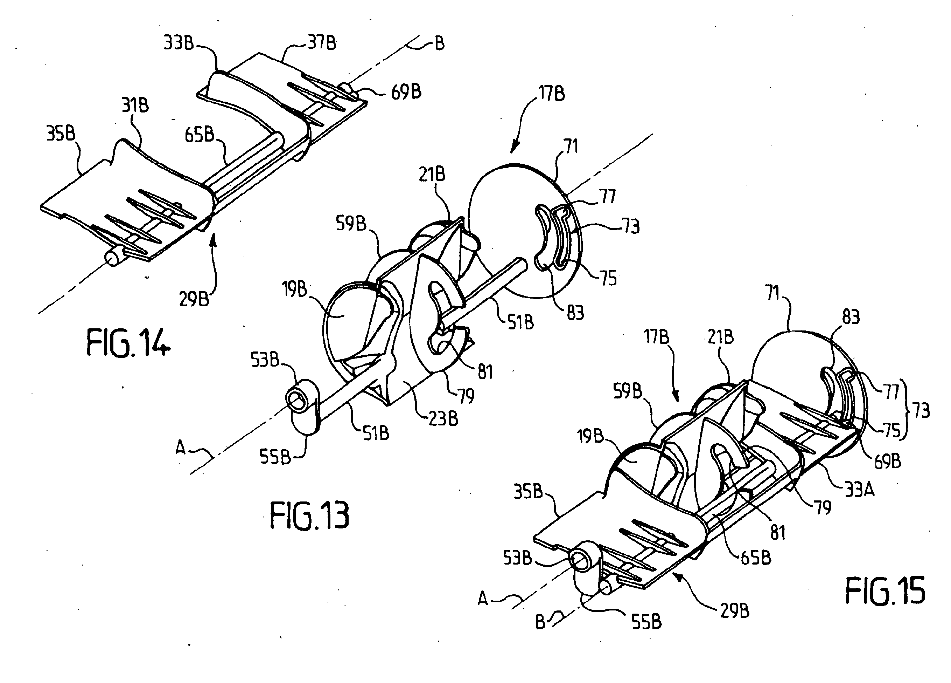

Figures 13 to 20 illustrate a second embodiment of the rotating part 3. In these figures, the same reference numerals as previously used, are employed to designate functionally similar elements. The letter "B" has been added to these numerals in order to distinguish the functional elements of figures 1 to 4 from their embodiment shown in figures 13 to 20.

The first rotating part 17B shown in figure 13 comprises a first axial partition 23B generally rectangular shaped. The partition 23B is connected to a first transverse partition 19B and to a second transverse partition 21B. The partitions 19B and '21B are configured as circular plates and present openings extending on a portion the circular plates.

The partitions 19B and 21B are connected to the partition 23B through two substantially conical portions, which are wide-mouthed towards the outside of the rotating part 17B and the apex thereof being located between the partitions 19B and 21B. When the rotating part 17B is in its second position, the conical portions permit an additional air flow to join the paths F2 and F3 after following a part of the path F1 upstream of the partition 23B.

The partition 23B is mounted on two coaxial shafts 51B extending from the partition 23B parallel to the rotation axis B and offset thereof. One of the shafts 51B presents at its free end a bearing 53B connected through an excentering plate 55B. The other shaft 51B is connected to its free end to one side of a circular side plate 71. On the other side, the plate 71 presents a bearing 53B centered with respect to the plate 71. The bearing 53B can be rotatably mounted within the casing 1 in housings, thus defining the rotation axis A of the rotation part 17B. The shafts 51B are offset with respect of the rotation axis A.

A groove 73 is arranged in the plate 71. The groove 73 comprises a guidance groove 75 configured as portion of a circular groove centered with respect to the rotation axis A. The groove 73 further comprises a transmission groove 77 extending the groove 75. The groove 77 extends radially with respect of the rotation axis A.

The rotating part 29B shown in figure 14 comprises a second axial partition 35B and a third axial partition 37B, both extending along the rotation axis B of the rotating part 29B. The partitions 35B and 37B are fixedly mounted on a main shaft 65B. Both ends of the shaft 65B can be rotatably mounted within the casing 1 in housings (not shown), thus defining the rotation axis B. Each partition 35B and 37B comprises a transverse partition 31B and 33B attached thereto. The partition 35B and 37B are mounted apart from each other so that the partition 23B of the rotating part 17B can be intercaled between partition 35B and 37B, as shown in figure 15.

As shown in figure 13, at a median position of the partition 23B, an optional partition 79 protrudes from one side of the partition 23B. On the other side of the partition 23B, an additional transverse partition 59B extends parallel to partitions 19B and 21B, at a median position. The partition 59B is also half-circular shaped. The partition 79 comprises an optional groove 81, which can be crossed by the shaft 65B. The groove 81 is arranged as a portion of a circular groove centered with respect to the rotation axis A so that the rotating part 17B can rotate relative to the rotating part without engaging it. Another additional groove 83 similar in form with the groove 81 is arranged in the plate 71 so that the end of the shaft 65B can pass through the plate 71.

As shown in figure 14, a pin 69B protrudes from the partition 37B parallel to the rotation axis B and offset thereof. The offset of the pin 69B with respect to the rotation axis B is chosen so that the pin 69B can be housed in the guidance groove 75, as shown in figure 15.

The operation of the rotating member 3 will now be explained below in conjunction with the figures 16 to 20.

Figure 16 shows the rotating member 3 when the rotating part 17B and 29B are in the angular position θ2. In this angular position, the pin 69B is located within the guidance groove 75, near of one end of the groove 75 opposite to the transmission groove 77. Because the groove 75 is circular and centered with respect to the rotation axis A, the rotating part 17B can rotate relative to the casing 1 without engaging the pin 69B, which moves relative to the groove 75, as shown for example in figure 17. Because the pin 69B is offset with respect to the axis B, the rotating part 29B is prevented to rotate until the pin 69B is located within the groove 75 (also shown in figure 17). In the angular position θE shown in figure 18, the pin 69B is released from the groove 75 and enters in groove 77. Because the groove 77 extends radially with respect to the rotation axis A, the groove 77 engages the pin 69B from this angular position θE. From this angular position θE, the rotation of the rotating part 17B results in a rotation of rotating part 29B, as shown in figure 19, since this rotation is no more prevented by the groove 75. These dependent rotation movements occur to the angular position θ1 shown in figure 20. In this angular position θ1, the rotating part 17B is in its second angular position whereas the rotating part 29B is in its first angular position, both relative to the casing 1.

The invention is not limited to the above-described exemplary embodiments but comprises all the variations and changes that could be considered by whose skilled in the art within the scope of the following claims.

## Claims

1. An air distribution device, particularly for a heating, ventilating and/or air conditioning system of a motor vehicle, comprising a rotating member (3) rotatably mounted within a casing (1) so as to permit an air flow to circulate following several paths (F1, F2, F3) depending on an angular position of the rotating member (3), said rotating member (3) comprising :
- a first rotating part (17, 17A, 17B) rotatably mounted within the casing (1), which comprises a rotation axis (A), and comprising a first axial partition (23, 23A, 23B),
- a second rotating part (29, 29A, 29B) rotatably mounted within the casing (1), which comprises a rotation axis (B), and
- a coupling device (43) arranged between the first rotating part (17, 17A, 17B) and the second rotating part (29, 29A, 29B) comprising a transmission member (45, 45A) which drives the second rotating part (29, 29A, 29B) by the first rotating part (17, 17A, 17B) from an intermediate angular position (θE) to a first end angular position (θ1) of said first rotating part (17, 17A, 17B) relative to said second rotating part (29, 29A, 29B),
the coupling device (43) comprises a guidance member (47, 47A) for guiding the first rotating part (17, 17A, 17B) relative to the second rotating part (29, 29A, 29B) from the second end angular position (θ2) to said intermediate angular position (θE) so as to permit a rotation of the first rotating part (17, 17A, 17B) while preventing a rotation of the second rotating part (29, 29A, 29B),
the guidance member (47, 47A) comprising a guidance pin (69A, 69B) integrally arranged with the second rotating part (29A, 29B) and extending parallel to the rotation axis (B) of the second rotating part (29A, 29B) and offset thereof,
and the guidance pin (69A, 69B) being movable within a guidance groove (63, 75) integrally arranged with the first rotating part (17A, 17B) and extending circumferentially relative to the rotation axis (A) of the first rotating part (17A, 17B), **characterised**
**in that** the transmission member (45A) comprises
- an annular gear (57) comprising a half-circular partially toothed ring protruding from the first partition (23A,) and integrally arranged with the first rotating part (17A) and
- a toothed wheel (67) integral with the second rotating part (29A), the toothed wheel (67) engaging the annular gear (57) at said intermediate angular position (θE).

2. The air distribution device of claim 1, **characterized in that** the guidance groove (75) is arranged in a side plate (71), which extends transversely to the rotation axis (A) of the first rotating part (17B).

3. An air distribution device, particularly for a heating, ventilating and/or air conditioning system of a motor vehicle, comprising a rotating member (3) rotatably mounted within a casing (1) so as to permit an air flow to circulate following several paths (F1, F2, F3) depending on an angular position of the rotating member (3), said rotating member (3) comprising :
- a first rotating part (17, 17A, 17B) rotatably mounted within the casing (1), which comprises a rotation axis (A) and comprising a first axial partition (23, 23A, 23B),
- a second rotating part (29, 29A, 29B) rotatably mounted within the casing (1), which comprises a rotation axis (B), and comprising a second axial partition (35A, 35B) and a third axial partition (37A, 37B) extending along the rotation axis (B) of the second rotating part (29, 29A, 29B) and fixedly mounted on a main shaft (65, 65B), and
- a coupling device (43) arranged between the first rotating part (17, 17A, 17B) and the second rotating part (29, 29A, 29B) comprising a transmission member (45, 45A) which drives the second rotating part (29, 29A, 29B) by the first rotating part (17, 17A, 17B) from an intermediate angular position (θE) to a first end angular position (θ1) of said first rotating part (17, 17A, 17B) relative to said second rotating part (29, 29A, 29B),
the coupling device (43) comprises a guidance member (47, 47A) for guiding the first rotating part (17, 17A, 17B) relative to the second rotating part (29, 29A, 29B) from the second end angular position (θ2) to said intermediate angular position (θE) so as to permit a rotation of the first rotating part (17, 17A, 17B) while preventing a rotation of the second rotating part (29, 29A, 29B),
the guidance member (47, 47A) comprising a guidance pin (69A, 69B) integrally arranged with the second rotating part (29A, 29B) and extending parallel to the rotation axis (B) of the second rotating part (29A, 29B) and offset thereof,
and the guidance pin (69A, 69B) being movable within a guidance groove (63, 75) integrally arranged with the first rotating part (17A, 17B) and extending circumferentially relative to the rotation axis (A) of the first rotating part (17A, 17B), characteised
in that a partition (79) protrudes from one side of the first axial partition (23B), the partition (79) comprising a groove (81), which can be crossed by the main shaft (65B), arranged as a portion of a circular groove centreed with respect to the rotation axis (A) of the first rotating part (17B).

4. The air distribution device of claim 3 **characterized in that** the transmission member (45) comprises a cam track (77) integrally arranged with the first rotating part (17B) and a cam follower' (69B) integrally arranged with the second rotating part (29B), the cam follower (69B) engaging the cam track (77) at said intermediate angular position (θE).

5. The air distribution device of claim 4, **characterized in that** the cam track (77) comprises a transmission groove (77) extending radially to the rotation axis (A) of the first rotating part (17B) and the cam follower (69B) comprises a transmission pin (69B) moving within the transmission groove (77), the transmission pin (69B) entering into the transmission groove (77) at said intermediate angular position.

6. The air distribution device of claim 5, **characterized in that** the transmission groove (77) is arranged in a side plate (71) transversely disposed relative to the rotation axis (A) of the first rotating part (17B).

7. The air distribution device of any one of claims 5 or 6,
**characterized in that** the transmission groove (77) communicates with the guidance groove (75) so as to define a unique coupling groove (73), the guidance pin (69B) and the transmission pin (69B) forming a unique coupling pin (69B) movable in the coupling groove (73).

8. The air distribution device of any preceding claim, **characterized in that** the rotating member (3) is mounted within the casing (1) so that the first rotating part (17, 17A, 17B) is in a second angular position and the second rotating part (29, 29A, 29B) is in a first angular position, relative to the casing (1), when the first rotating part (17, 17A, 17B) and the second rotating part (29, 29A, 29B) are in the first end angular position (θ1).

9. The air distribution device of claim 8, **characterized in that** the rotating member (3) is mounted within the casing (1) so that the first rotating part (17, 17A, 17B) is in a first angular position and the second rotating part (29, 29A, 29B) is in a second angular position, relative to the casing (1), when the first rotating part (17, 17A, 17B) and the second rotating part (29, 29A, 29B) are in the second end angular position (θ2).

10. The air distribution device of any preceding claim, **characterized in that** the first rotating part (17, 17A, 17B) comprises a first transverse partition (19, 19A, 19B) connected to the first axial partition (23, 23A, 23B).

11. The air distribution device of claim 10, **characterized**
**in that** the first transverse partition (19, 19A, 19B) comprises at least one first opening such that a first path (F1) and a second path (F2) communicate with each other upstream from the rotating member (3) when the first rotating part (17, 17A, 17B) is in the second angular position.

12. The air distribution device of claim 10 or 11,
**characterized in that** the first transverse partition (19, 19A, 19B) co-operates with the casing (1) downstream from the rotating member (3) for closing a first path (F1) when the first rotating part (17, 17A, 17B) is in the second angular position.

13. The air distribution device of any preceding claim, **characterized in that** the second rotating part (29, 29A, 29B) comprises a second transverse partition (31, 31A, 31B) connected to the second axial partition (35, 35A, 35B).

14. The air distribution device of claim 13, **characterized**
**in that** the second transverse partition (31, 31A, 31B) comprises at least one first opening such that the first path (F1) and the second path (F2) communicate with each other upstream from the rotating member (3) when the second rotating part (29, 29A, 29B) is in a second angular position.

## Patentansprüche

1. Luftverteilungsvorrichtung, insbesondere für ein Heizungs-, Belüftungs- und/oder Klimatisierungssystem eines Kraftfahrzeugs, wobei die Vorrichtung ein innerhalb eines Gehäuses (1) drehbar montiertes Drehelement (3) umfasst, um abhängig von einer Winkelposition des Drehelements (3) einen umlaufenden Luftausstoß über mehrere Wege (F1, F2, F3) zuzulassen, wobei das Drehelement (3) Folgendes umfasst:
- ein innerhalb des Gehäuses (1) drehbar montiertes erstes Drehteil (17, 17A, 17B), das eine Drehachse (A) sowie eine erste axiale Abtrennung (23, 23A, 23B) umfasst;
- ein innerhalb des Gehäuses (1) drehbar montiertes zweites Drehteil (29, 29A, 29B), das eine Drehachse (B) umfasst; und
- eine zwischen dem ersten Drehteil (17, 17A, 17B) und dem zweiten Drehteil (29, 29A, 29B) vorgesehene Kupplungsvorrichtung (43), die ein Übertragungselement (45, 45A) umfasst, das das zweite Drehteil (29, 29A, 29B) durch das erste Drehteil (17, 17A, 17B) aus einer Winkelzwischenposition (θE) in eine erste Winkelendposition (θ1) des ersten Drehteils (17, 17A, 17B) im Verhältnis zum zweiten Drehteil (29, 29A, 29B) antreibt,
wobei die Kupplungsvorrichtung (43) ein Führungselement (47, 47A) umfasst, das das erste Drehteil (17, 17A, 17B) im Verhältnis zum zweiten Drehteil (29, 29A, 29B) aus der zweiten Winkelendposition (θ2) in die Winkelzwischenposition (θE) führt, um eine Drehung des ersten Drehteils (17, 17A, 17B) zuzulassen und gleichzeitig eine Drehung des zweiten Drehteils (29, 29A, 29B) zu verhindern,
wobei das Führungselement (47, 47A) einen integral mit dem zweiten Drehteil (29A, 29B) vorgesehenen Führungsstift (69A, 69B) umfasst, der sich parallel zur Drehachse (B) des zweiten Drehteils (29A, 29B) erstreckt und versetzt dazu vorgesehen ist,
und wobei der Führungsstift (69A, 69B) innerhalb einer integral mit dem ersten Drehteil (17A, 17B) vorgesehenen Führungsnut (63, 75) bewegbar ist, die sich über den Umfang im Verhältnis zur Drehachse (A) des ersten Drehteils (17A, 17B) erstreckt,
**dadurch gekennzeichnet, dass** das Übertragungselement (45A) Folgendes umfasst:
- einen Zahnring (57), der einen halbkreisförmigen, teilweise gezahnten Ring umfasst, der aus der ersten Abtrennung (23A) herausragt und integral mit dem ersten Drehteil (17A) vorgesehen ist, und
- ein integral mit dem zweiten Drehteil (29A) vorgesehenes gezahntes Rad (67), wobei das gezahnte Rad (67) an der Winkelzwischenposition (θE) in den Zahnring (57) eingreift.

2. Luftverteilungsvorrichtung nach Anspruch 1, **dadurch gekennzeichnet, dass** die Führungsnut (75) in einer Seitenplatte (71) vorgesehen ist, die sich quer zur Drehachse (A) des ersten Drehteils (17B) erstreckt.

3. Luftverteilungsvorrichtung, insbesondere für ein Heizungs-, Belüftungs- und/oder Klimatisierungssystem eines Kraftfahrzeugs, wobei die Vorrichtung ein innerhalb eines Gehäuses (1) drehbar montiertes Drehelement (3) umfasst, um abhängig von einer Winkelposition des Drehelements (3) einen umlaufenden Luftausstoß über mehrere Wege (F1, F2, F3) zuzulassen, wobei das Drehelement (3) Folgendes umfasst:
- ein innerhalb des Gehäuses (1) drehbar montiertes erstes Drehteil (17, 17A, 17B), das eine Drehachse (A) sowie eine erste axiale Abtrennung (23, 23A, 23B) umfasst;
- ein innerhalb des Gehäuses (1) drehbar montiertes zweites Drehteil (29, 29A, 29B), das eine Drehachse (B) sowie eine zweite axiale Abtrennung (35A, 35B) und eine dritte axiale Abtrennung (37A, 37B) umfasst, die sich entlang der Drehachse (B) des zweiten Drehteils (29, 29A, 29B) erstreckt und fest an einer Hauptachse (65, 65B) montiert ist; und
- eine zwischen dem ersten Drehteil (17, 17A, 17B) und dem zweiten Drehteil (29, 29A, 29B) vorgesehene Kupplungsvorrichtung (43), die ein Übertragungselement (45, 45A) umfasst, das das zweite Drehteil (29, 29A, 29B) durch das erste Drehteil (17, 17A, 17B) aus einer Winkelzwischenposition (θE) in eine erste Winkelendposition (θ1) des ersten Drehteils (17, 17A, 17B) im Verhältnis zum zweiten Drehteil (29, 29A, 29B) antreibt,
wobei die Kupplungsvorrichtung (43) ein Führungselement (47, 47A) umfasst, das das erste Drehteil (17, 17A, 17B) im Verhältnis zum zweiten Drehteil (29, 29A, 29B) aus der zweiten Winkelendposition (θ2) in die Winkelzwischenposition (θE) führt, um eine Drehung des ersten Drehteils (17, 17A, 17B) zuzulassen und gleichzeitig eine Drehung des zweiten Drehteils (29, 29A, 29B) zu verhindern,
wobei das Führungselement (47, 47A) einen integral mit dem zweiten Drehteil (29A, 29B) vorgesehenen Führungsstift (69A, 69B) umfasst, der sich parallel zur Drehachse (B) des zweiten Drehteils (29A, 29B) erstreckt und versetzt dazu vorgesehen ist,
und wobei der Führungsstift (69A, 69B) innerhalb einer integral mit dem ersten Drehteil (17A, 17B) vorgesehenen Führungsnut (63, 75) bewegbar ist, die sich über den Umfang im Verhältnis zur Drehachse (A) des ersten Drehteils (17A, 17B) erstreckt,
**dadurch gekennzeichnet, dass** eine Abtrennung (79) aus einer Seite der ersten axialen Abtrennung (23B) herausragt, wobei die Abtrennung (79) eine Nut (81), die sich mit der Hauptwelle (65B) kreuzen kann, umfasst, die als ein Abschnitt einer kreisförmigen Nut ausgebildet ist, die im Verhältnis zur Drehachse (A) des ersten Drehteils (17B) mittig vorgesehen ist.

4. Luftverteilungsvorrichtung nach Anspruch 3, **dadurch gekennzeichnet, dass** das Übertragungselement (45) eine integral mit dem ersten Drehteil (17B) vorgesehene Nockenbahn (77) sowie einen integral mit dem zweiten Drehteil (29B) vorgesehenen Stößel (69B) umfasst, wobei der Stößel (69B) an der Winkelzwischenposition (θE) in die Nockenbahn (77) eingreift.

5. Luftverteilungsvorrichtung nach Anspruch 4, **dadurch gekennzeichnet, dass** die Nockenbahn (77) eine Übertragungsnut (77) umfasst, die sich radial zur Drehachse (A) des ersten Drehteils (17B) erstreckt, und dass der Stößel (69B) einen Übertragungsstift (69B) umfasst, der sich innerhalb der Übertragungsnut (77) bewegt, wobei der Übertragungsstift (69B) an der Winkelzwischenposition (θE) in die Übertragungsnut (77) eintritt.

6. Luftverteilungsvorrichtung nach Anspruch 5, **dadurch gekennzeichnet, dass** die Übertragungsnut (77) in einer Seitenplatte (71) vorgesehen ist, die quer zur Drehachse (A) des ersten Drehteils (17B) vorgesehen ist.

7. Luftverteilungsvorrichtung nach einem der Ansprüche 5 oder 6, **dadurch gekennzeichnet, dass** die Übertragungsnut (77) mit der Führungsnut (75) in Verbindung steht, um eine einmalige Kupplungsnut (73) zu definieren, wobei der Führungsstift (69B) und der Übertragungsstift (69B) einen in der Kupplungsnut (73) bewegbaren einmaligen Kupplungsstift (69B) bilden.

8. Luftverteilungsvorrichtung nach einem der vorstehend aufgeführten Ansprüche, **dadurch gekennzeichnet, dass** das Drehelement (3) innerhalb des Gehäuses (1) montiert ist, so dass das erste Drehteil (17, 17A, 17B) in einer zweiten Winkelposition und das zweite Drehteil (29, 29A, 29B) in einer ersten Winkelposition im Verhältnis zum Gehäuse (1) sind, wenn sich das erste Drehteil (17, 17A, 17B) und das zweite Drehteil (29, 29A, 29B) in der ersten Winkelendposition (θ1) befinden.

9. Luftverteilungsvorrichtung nach Anspruch 8, **dadurch gekennzeichnet, dass** das Drehelement (3) innerhalb des Gehäuses (1) montiert ist, so dass das erste Drehteil (17, 17A, 17B) in einer ersten Winkelposition und das zweite Drehteil (29, 29A, 29B) in einer zweiten Winkelposition im Verhältnis zum Gehäuse (1) sind, wenn sich das erste Drehteil (17, 17A, 17B) und das zweite Drehteil (29, 29A, 29B) in der zweiten Winkelendposition (θ2) befinden.

10. Luftverteilungsvorrichtung nach einem der vorstehend aufgeführten Ansprüche, **dadurch gekennzeichnet, dass** das erste Drehteil (17, 17A, 17B) eine erste quer verlaufende Abtrennung (19, 19A, 19B) umfasst, die mit der ersten axialen Abtrennung (23, 23A, 23B) verbunden ist.

11. Luftverteilungsvorrichtung nach Anspruch 10, **dadurch gekennzeichnet, dass** die erste quer verlaufende Abtrennung (19, 19A, 19B) mindestens eine erste Öffnung umfasst, die so ausgebildet ist, dass ein erster Weg (F1) und ein zweiter Weg (F2) stromaufwärts vor dem Drehelement (3) miteinander kommunizieren, wenn das erste Drehteil (17, 17A, 17B) in der zweiten Winkelposition ist.

12. Luftverteilungsvorrichtung nach Anspruch 10 oder 11, **dadurch gekennzeichnet, dass** die erste quer verlaufende Abtrennung (19, 19A, 19B) mit dem Gehäuse (1) stromabwärts hinter dem Drehelement (3) zusammenwirkt, um einen ersten Weg (F1) zu schließen, wenn das erste Drehteil (17, 17A, 17B) in der zweiten Winkelposition ist.

13. Luftverteilungsvorrichtung nach einem der vorstehend aufgeführten Ansprüche, **dadurch gekennzeichnet, dass** das zweite Drehteil (29, 29A, 29B) eine zweite quer verlaufende Abtrennung (31, 31A, 31B) umfasst, die mit der zweiten axialen Abtrennung (35, 35A, 35B) verbunden ist.

14. Luftverteilungsvorrichtung nach Anspruch 13, **dadurch gekennzeichnet, dass** die zweite quer verlaufende Abtrennung (31, 31A, 31B) mindestens eine erste Öffnung umfasst, die so ausgebildet ist, dass der erste Weg (F1) und der zweite Weg (F2) stromaufwärts vor dem Drehelement (3) miteinander kommunizieren, wenn das zweite Drehteil (29, 29A, 29B) in einer zweiten Winkelposition ist.

## Revendications

1. Dispositif de distribution d'air, destiné en particulier à un système de chauffage, de ventilation et/ou de climatisation d'un véhicule à moteur, comprenant un élément rotatif (3) monté rotatif dans un carter (1) de manière à permettre à un débit d'air de circuler en suivant plusieurs chemins (F1, F2, F3) en fonction d'une position angulaire de l'élément rotatif (3), ledit élément rotatif (3) comprenant :
- une première partie rotative (17, 17A, 17B) montée rotative dans le carter (1), qui comprend un axe de rotation (A) et qui comprend une première cloison axiale (23, 23A, 23B),
- une deuxième partie rotative (29, 29A, 29B) montée rotative dans le carter (1), qui comprend un axe de rotation (B), et
- un dispositif d'accouplement (43) agencé entre la première partie rotative (17, 17A, 17B) et la deuxième partie rotative (29, 29A, 29B) comprenant un élément de transmission (45, 45A) qui permet l'entraînement de la deuxième partie rotative (29, 29A, 29B) par la première partie rotative (17, 17A, 17B) d'une position angulaire intermédiaire (θE) à une première position angulaire d'extrémité (θ1) de ladite première partie rotative (17, 17A, 17B) par rapport à ladite deuxième partie rotative (29, 29A, 29B),
le dispositif d'accouplement (43) comprend un élément de guidage (47, 47A) pour guider la première partie rotative (17, 17A, 17B) par rapport à la deuxième partie rotative (29, 29A, 29B) de la deuxième position angulaire d'extrémité (θ2) à ladite position angulaire intermédiaire (θE) de manière à autoriser une rotation de la première partie rotative (17, 17A, 17B) tout en s'opposant à une rotation de la deuxième partie rotative (29, 29A, 29B),
l'élément de guidage (47, 47A) comprenant un axe de guidage (69A, 69B) agencé intégralement avec la deuxième partie rotative (29A, 29B) et s'étendant en parallèle à l'axe de rotation (B) de la deuxième partie rotative (29A, 29B) et décalé par rapport à celle-ci,
et l'axe de guidage (69A, 69B) pouvant se déplacer dans une gorge de guidage (63, 75) agencée intégralement avec la première partie rotative (17A, 17B) et s'étendant circonférentiellement par rapport à l'axe de rotation (A) de la première partie rotative (17A, 17B), **caractérisé en ce que** l'élément de transmission (45A) comprend :
- une couronne annulaire (57) comprenant une bague semi-circulaire partiellement dentée dépassant de la première cloison (23A) et agencée intégralement avec la première partie rotative (17A) et
- une roue dentée (67) intégrale à la deuxième partie rotative (29A), la roue dentée (67) étant en prise avec la couronne annulaire (57) à ladite position angulaire intermédiaire (θE).

2. Dispositif de distribution d'air selon la revendication 1, **caractérisé en ce que** la gorge de guidage (75) est agencée dans une plaque latérale (71), qui s'étend transversalement à l'axe de rotation (A) de la première partie rotative (17B).

3. Dispositif de distribution d'air, destiné en particulier à un système de chauffage, de ventilation et/ou de climatisation d'un véhicule à moteur, comprenant un élément rotatif (3) monté rotatif dans un carter (1) de manière à permettre à un débit d'air de circuler en suivant plusieurs chemins (F1, F2, F3) en fonction d'une position angulaire de l'élément rotatif (3), ledit élément rotatif (3) comprenant :
- une première partie rotative (17, 17A, 17B) montée rotative dans le carter (1), qui comprend un axe de rotation (A) et qui comprend une première cloison axiale (23, 23A, 23B),
- une deuxième partie rotative (29, 29A, 29B) montée rotative dans le carter (1), qui comprend un axe de rotation (B) et qui comprend une deuxième cloison axiale (35A, 35B) et une troisième cloison axiale (37A, 37B) s'étendant le long de l'axe de rotation (B) de la deuxième partie rotative (29, 29A, 29B) et qui est monté de manière fixe sur l'arbre principal (65, 65B), et
- un dispositif d'accouplement (43) agencé entre la première partie rotative (17, 17A, 17B) et la deuxième partie rotative (29, 29A, 29B) comprenant un élément de transmission (45, 45A) qui permet l'entraînement de la deuxième partie rotative (29, 29A, 29B) par la première partie rotative (17, 17A, 17B) d'une position angulaire intermédiaire (θE) à une première position angulaire d'extrémité (θ1) de ladite première partie rotative (17, 17A, 17B) par rapport à ladite deuxième partie rotative (29, 29A, 29B),
le dispositif d'accouplement (43) comprend un élément de guidage (47, 47A) pour guider la première partie rotative (17, 17A, 17B) par rapport à la deuxième partie rotative (29, 29A, 29B) de la deuxième position angulaire d'extrémité (θ2) à ladite position angulaire intermédiaire (θE) de manière à autoriser une rotation de la première partie rotative (17, 17A, 17B) tout en s'opposant à une rotation de la deuxième partie rotative (29, 29A, 29B),
l'élément de guidage (47, 47A) comprenant un axe de guidage (69A, 69B) agencé intégralement avec la deuxième partie rotative (29A, 29B) et s'étendant en parallèle à l'axe de rotation (B) de la deuxième partie rotative (29A, 29B) et décalé par rapport à celle-ci,
et l'axe de guidage (69A, 69B) pouvant se déplacer dans une gorge de guidage (63, 75) agencée intégralement avec la première partie rotative (17A, 17B) et s'étendant circonférentiellement par rapport à l'axe de rotation (A) de la première partie rotative (17A, 17B), **caractérisé en ce qu'**une cloison (79) dépasse d'un côté de la première cloison axiale (23B), la cloison (79) comprenant une gorge (81), qui peut être traversée par l'arbre principal (65B), agencée en temps que partie d'une gorge circulaire centrée par rapport à l'axe de rotation (A) de la première partie rotative (17B).

4. Dispositif de distribution d'air selon la revendication 3, **caractérisé en ce que** l'élément de transmission (45) comprend un chemin de came (77) agencé intégralement avec la première partie rotative (17B) et un suiveur de came (69B) agencé intégralement avec la deuxième partie rotative (29B), le suiveur de came (69B) étant en engagement avec le chemin de came (77) à ladite position angulaire intermédiaire (θE)

5. Dispositif de distribution d'air selon la revendication 4, **caractérisé en ce que** le chemin de came (77) comprend une gorge de transmission (77) s'étendant radialement par rapport à l'axe de rotation (A) de la première partie rotative (17B) et que le suiveur de came (69B) comprend un axe de transmission (69B) se déplaçant dans la gorge de transmission (77), l'axe de transmission (69B) entrant dans la gorge de transmission (77) à ladite position angulaire intermédiaire (θE).

6. Dispositif de distribution d'air selon la revendication 5, **caractérisé en ce que** la gorge de transmission (77) est agencée dans une plaque latérale (71) disposée transversalement par rapport à l'axe de rotation (A) de la première partie rotative (17B).

7. Dispositif de distribution d'air selon l'une quelconque des revendications 5 ou 6, **caractérisé en ce que** la gorge de transmission (77) communique avec la gorge de guidage (75) de manière à définir une gorge d'accouplement unique (73), l'axe de guidage (69B) et l'axe de transmission (69B) formant un axe d'accouplement unique (69B) pouvant se déplacer dans la gorge d'accouplement (73).

8. Dispositif de distribution d'air selon l'une quelconque des revendications précédentes, **caractérisé en ce que** l'élément de rotation (3) est monté dans le carter (1) de manière à ce que la première partie rotative (17, 17A, 17B) soit dans une deuxième position angulaire et que la deuxième partie rotative (29, 29A, 29B) soit dans une première position angulaire, par rapport au carter (1) quand la première partie rotative (17, 17A, 17B) et la deuxième partie rotative (29, 29A, 29B) sont dans la première position angulaire d'extrémité (θ1).

9. Dispositif de distribution d'air selon la revendication 8, **caractérisé en ce que** l'élément de rotation (3) est monté dans le carter (1) de manière à ce que la première partie rotative (17, 17A, 17B) soit dans une première position angulaire et que la deuxième partie rotative (29, 29A, 29B) soit dans une deuxième position angulaire, par rapport au carter (1) quand la première partie rotative (17, 17A, 17B) et la deuxième partie rotative (29, 29A, 29B) sont dans la deuxième position angulaire d'extrémité (θ2).

10. Dispositif de distribution d'air selon l'une quelconque des revendications précédentes, **caractérisé en ce que** la première partie rotative (17, 17A, 17B) comprend une première cloison transversale (19, 19A, 19B) reliée à la première cloison axiale (23, 23A, 23B).

11. Dispositif de distribution d'air selon la revendication 10, **caractérisé en ce que** la première cloison transversale (19, 19A, 19B) comprend au moins une première ouverture de manière à ce qu'un premier chemin (F1) et un deuxième chemin (F2) communiquent l'un avec l'autre en amont de l'élément rotatif (3) quand la première partie rotative (17, 17A, 17B) est dans la deuxième position angulaire.

12. Dispositif de distribution d'air selon la revendication 10 ou 11, **caractérisé en ce que** la première cloison transversale (19, 19A, 19B) coopère avec le carter (1) en aval de l'élément rotatif (3) pour fermer un premier chemin (F1) quand la première partie rotative (17, 17A, 17B) est dans la deuxième position angulaire.

13. Dispositif de distribution d'air selon l'une quelconque des revendications précédentes, **caractérisé en ce que** la deuxième partie rotative (29, 29A, 29B) comprend une deuxième cloison transversale (31, 31A, 31B) reliée à la deuxième cloison axiale (35, 35A, 35B).

14. Dispositif de distribution d'air selon la revendication 13, **caractérisé en ce que** la deuxième cloison transversale (31, 31A, 31B) comprend au moins une première ouverture de manière à ce que le premier chemin (F1) et le deuxième chemin (F2) communiquent l'un avec l'autre en amont de l'élément rotatif (3) quand la deuxième partie rotative (29, 29A, 29B) est dans une deuxième position angulaire.
